# EUROPEAN PATENT APPLICATION

(11) **EP 1 298 622 A2**
(43) Date of publication of application: **02.04.2003**
(21) Application number: 02255224.4
(22) Date of filing: 26.07.2002
(51) Int. Cl.: G08G 1/0969

(54) **Satellite navigation system for more personalized navigation**

(30) Priority: 31.07.2001 JP 2001232554
(71) Applicant: Pioneer Corporation, Meguro-ku, Tokyo (JP); Increment P Corporation, Tokyo-to (JP)
(72) Inventor: Ogawa, Kazuya, c/o Increment P Corporation, Tokyo-to (JP)
(74) Representative: Townsend, Victoria Jayne

(57) **Abstract**

A satellite navigation system (S) comprises a server (SV) and a terminal (T) mounted on a user's vehicle and communicably connected with the server through a communication network (IN). The terminal receives map data through the communication means, detects a current position of the user's vehicle using a satellite signal, and performs navigating processing for the user based on the map data and the current position. The system further comprises a registering unit (1 to 4) and a processing unit (1, 5, 15, 10, 11, 13, 16). The registering unit is configured to be placed with the server and to store user's individual information. The user's individual information is previously registered in the registering unit. The processing unit is configured to perform the navigating processing by making reference to the user's individual information stored in the registering unit. Thus, without registering user's individual information through user's own operations, each user is able to obtain more personalized navigated information.

## Description

### BACKGROUND OF THE INVENTION

### (Field of the Invention)

The present invention relates to a satellite navigation system capable of performing navigation with reference to pieces of users' individual information that provides users' profiles.

### (Description of Related Art)

In recent years, a satellite navigation system has become popular. The satellite navigation system guides a user (driver) to a user's desired destination with a map shown on a navigating terminal. A practical configuration of such satellite navigation system is configured as be low . In response to a user's request, map data stored in a server placed at a map data base site are transmitted to such a navigating terminal as an on-vehicle navigation unit, mobile navigation unit, PDA, or mobile phone, through communication means such as a computer network (e.g., the Internet) or a mobile communication network. The navigating terminal includes a GPS (global-positioning system) to detect a vehicle's current position, and provides a map on a monitor thereof using both the vehicle's current position and the received map data.

However, the conventional satellite navigation system is not relevant to processing pieces of individual information indicative of the profile of each user, which includes an age, sex, driving history, or the type of a vehicle, vehicle height, or vehicle width. Thus, various pieces of information including guide information are provided all users in the same way, even through the users who receive such information are more or less different one from another in their tastes. Therefore, information uniformly provided as above does not always fully satisfy a desire of each user.

One possible way to avoid such an inconvenience is that each user registers pieces of individual information about each user into a navigating terminal. However, such a way imposes the registering operations of the information on each user, thus involving the user into troublesome work. Moreover, the above possible way requires cumbersome retrieval operations and a long time to retrieve a piece of desired information, because the individual information is stored in the navigating terminal. Still, the capacity of a memory to memorize necessary user's individual information, which is equipped with a navigating terminal, is obliged to be larger.

### SUMMARY OF THE INVENTION

The present invention has been made in view of the above circumstances, and an object of the present invention is, therefore, to provide a satellite navigation system, a server incorporated in the system, and a navigation terminal, which are able to provide more personalized retrieval results to each user with easier operations without forcing each user to input into a navigating terminal user's individual information.

In order to achieve the above object, as one aspect of the present invention, there is provided a satellite navigation system (S) comprising a server (SV) and a terminal (T) mounted on a user's vehicle and communicably connected with the server through communication means (IN), the terminal receiving map data through the communication means, detecting a current position of the user's vehicle using a satellite signal, and performing navigating processing for the user based on the map data and the current position, the system comprising: a registering unit (1 to 4) configured to be placed with the server and to store user's individual information, the user's individual information being previously registered in the registering unit; and a processing unit (1, 5, 15, 10, 11, 13, 16) configured to perform the navigating processing by making reference to the user's individual information stored in the registering unit.

Therefore, it is not necessary for each user to register individual information (that is, a user's profile) by herself or himself. With the retrieval operations more simplified, well-personalized retrieved results, that is, more inherent retrieved results to each user's desire, can be acquired. As a result, the satellite navigation system with both easier operations and excellent usability can be provided.

As another aspect of the present invention, there is provided a server (SV) communicably connected via communication means (IN) with a terminal (T) mounted on a user's vehicle so as to constitute a navigation system (S), the terminal receiving map data through the communication means from the server, detecting a current position of the user's vehicle using a satellite signal, and performing navigating processing for the user based on the map data and the current position, the server comprising: a registering unit (1 to 4) configured to store user's individual information, the user's individual information being previously registered in the registering unit; and a processing unit (15, 10, 11, 13, 16) configured to perform the navigating processing by making reference to the user's individual information stored in the registering unit, in response to a retrieval request transmitted from the terminal via the communication means.

Accordingly, well-personalized retrieved results, that is, more inherent retrieved results to each user's desire, can be acquired. The satellite navigation system with both easier operations and excellent usability can therefore be provided.

In the second configuration, it is preferred that the processing unit includes: a retrieving unit (15, 10, 11, 13, 16) configured to receive the desired retrieval request to perform a retrieval for the retrieval request utilizing the user's individual information stored in the registering unit; and a transmitting unit (10, 15) configured to transmit a retrieved result carried out by the retrieving unit. Thus, the user's individual information can be used for a user's desired retrieval.

In this configuration, the retrieving unit may be configured to receive, together with the retrieval request, information specifying utilization of the user's individual information, and to determine whether the retrieval with reference to the user's individual information should be carried out not, on the basis of the utilization-specifying information. It is therefore possible to carry out retrieval of a desired target whenever a user desires to have more personalized retrieval results about the target.

It may also be configured such that the retrieving unit is configured to search for a target of the retrieval by extracting the target in accordance with the user's individual information.

Still preferably, the registering unit is configured to store, as the user's individual information, at least one of user's personal information, information about a user's vehicle, and information about geographical matters in which the user is interested. By way of example, the information about geographical matters includes at least one of a user's favorite location and a route recently used by the user.

According to another aspect of the present invention, there is provided a terminal (T) mounted on a user's vehicle and communicably connected via communication means (IN) with a server (SV) so as to constitute a navigation system (S), the terminal receiving map data through the communication means from the server, detecting a current position of the user's vehicle using a satellite signal, and performing navigating processing for the user based on the map data and the current position, the terminal comprising: a transmitting unit (1, 3, 5) configured to transmit a user's desired retrieval request for the navigating processing and information specifying utilization of the user's individual information, and a display (2) configured to display a retrieved result transmitted from server via the communication means, the retrieved result being obtained by the server on the basis of the user's individual information and the utilization-specifying information. Accordingly, well-personalized retrieved results, that is, more inherent retrieved results to each user's desire, can be acquired.

Also the present invention provides a recording medium for storing the user's individual information according to the second or eighth configurations.

Still further, as another aspect of the present invention, there is provided a satellite navigation method adaptable to a satellite navigation system (S) comprising a server (SV) and a terminal (T) mounted on a user's vehicle and communicably connected with the server through communication means (IN), the terminal receiving map data through the communication means, detecting a current position of the user's vehicle using a satellite signal, and performing navigating processing for the user based on the map data and the current position, the method comprising the steps of: storing user's individual information into a memory of the server previously before performing the navigating processing; determining whether a retrieval for the navigating processing should be performed with reference to the user's individual information; and performing the navigating processing by making reference to the user's individual information in cases where it is determined that the retrieval should be performed with reference to the user's individual information. This configuration also enables well-personalized retrieved results, that is, more inherent retrieval results to each user's desire, can be acquired.

### BRIEF DESCRIPTION OF THE DRAWINGS

Other objects and aspects of the present invention will become apparent from the following description and embodiments with reference to the accompanying drawings in which:
Fig. 1A shows the entire block diagram of a navigation system according to an embodiment of the present invention;
Fig. 1B details the block diagram of a server incorporated in the navigation system;
Fig. 1C details the block diagram of a terminal incorporated in the navigation terminal;
Fig. 2 is a flowchart showing processing for retrieving a map in the embodiment;
Fig. 3A is a flowchart showing processing for computing a desired route, which is carried out as part of route processing according to the embodiment;
Fig. 3B is a flowchart showing processing for guiding the route, which is carried out as part of route processing according to the embodiment;
Fig. 4 shows a flowchart for information retrieval processing according to the embodiment;
Fig. 5 is a flowchart representing processing required for retrieving a parking lot using individual pieces of information about each user, which is carried out according to the embodiment; and
Fig. 6 is a flowchart showing processing required for performing route retrieval to find a desired destination using individual pieces of information, which is carried out according to the embodiment.

### DETAILED DESCRIPTION OF THE PREFERRED EMBODIMENT

A preferred embodiment according to the present invention will now be described with reference to accompanying drawings.

In the following embodiment, a satellite navigation system to which the present invention is applied will now be described. The satellite navigation system includes on-vehicle terminals, a server, and a network such as the Internet connecting the server to the terminals, in which both of the terminals and the server are able to comminute to each other through the network. The satellite navigation system is able to give guide information to a user on a vehicle on which each terminal is mounted.

### (I) Entire configuration and its operations

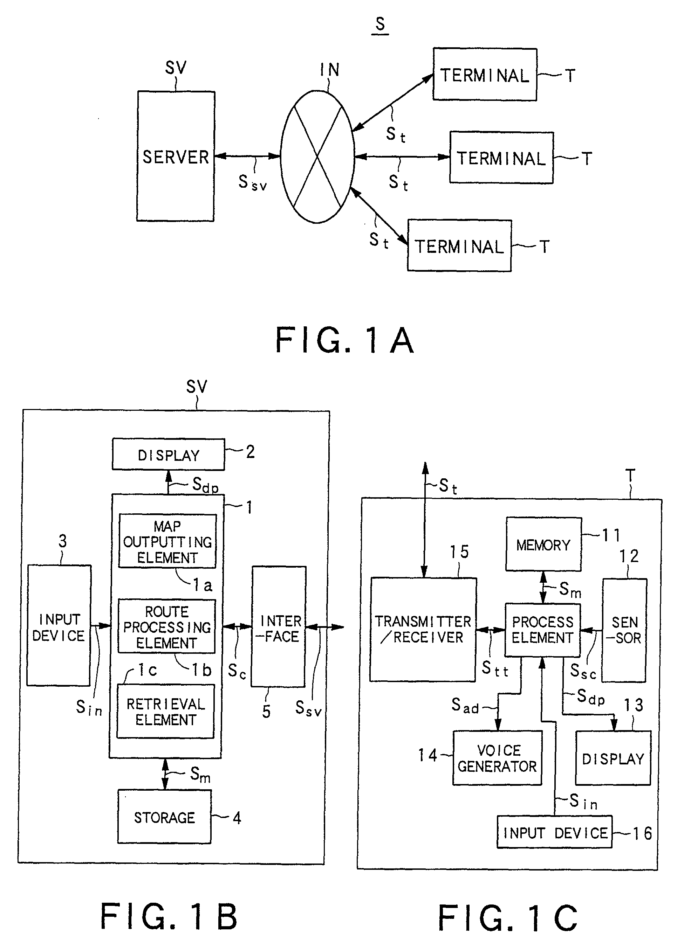

First, referring to Figs. 1A to 1C, to 4, the entire configuration and its operations of a navigation system according to the present embodiment.

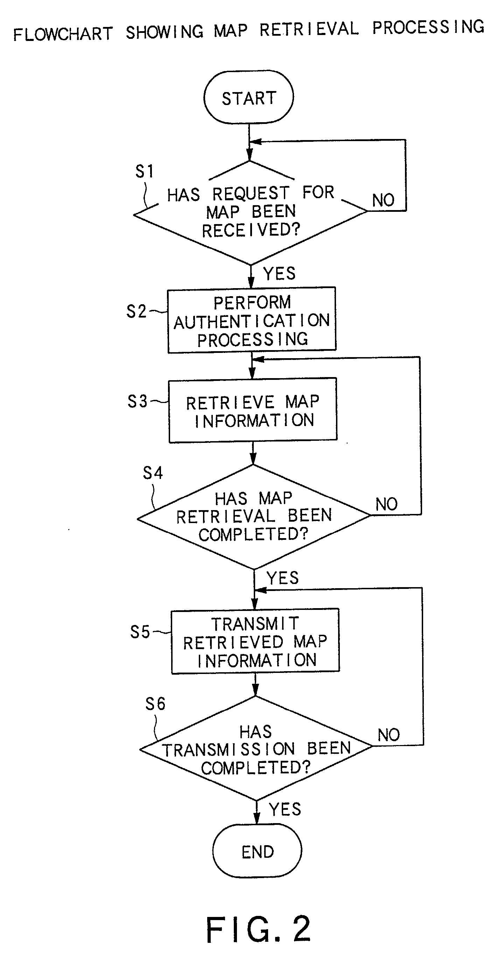

Figs. 1A to 1C show in block forms the configurations of the navigation system, while Figs. 2 to 4 show navigation processing performed by the navigation system.

As shown in Fig. 1A, the satellite navigation system S is equipped with plural terminals T mounted on users' vehicles, the Internet IN serving as communication means, and a server SV serving as a control for the entire system.

Each terminal T is configured to send a terminal signal St through the Internet IN to the server SV and receive another terminal signal St from the server SV. The terminal signal St sent from each terminal T to the server SV includes pieces of information for requesting information concerning the current position and current driving direction of a vehicle as well as information that should be provided to a driver on the vehicle. Further, the terminal information St sent from the server SV to each terminal T is composed of various types of information necessary for navigating processing sent through the Internet IN in response to the request information.

The server SV is configured to receive, as a server signal Ssv, the terminal signal St sent from each terminal T by way of the Internet IN. Based on the server signal Ssv, the server SV performs various kinds of processing, which includes, as will be detailed later, processing to retrieve various kinds of information, such as map data, that will be presented on a certain terminal T for user's viewing and processing to retrieve a guide route for each terminal-mounted vehicle. In addition, the server SV sends out, as another server signal Ssv, results of the processing to a specified terminal T via the Internet IN. Incidentally, the server SV has the capacity of transmitting and receiving necessary information to and from a plurality of terminals T on the basis of, for example, a time sharing technique.

The server SV and each terminal T will now be detailed in terms of their configurations.

As shown in Fig. 1B, the server SV is equipped with a CPU 1 responsible for control means, a display 2, an input device 3, a storage 4 composed of a hard disk unit and others, which serves as individual information registering means, and an interface 5.

The interface 5 is formed to perform predetermined processing as an input interface on the server signal Ssv sent through the Internet IN so that a processing server signal Sc is outputted from the interface 5 to the CPU 1. Further, the interface 5 performs predetermined processing as an output interface on the processing server signal Sc sent from the CPU 1 to each terminal T so that a server signal Ssv is provided to the terminal T via the Internet IN.

The storage 4 memorizes various type of information necessary for navigation processing executed in this embodiment. Such information includes map information to be displayed on the terminal T, a variety of kinds of information used for route processing described later, spot information required for performing navigation processing, and individual information about each user who uses the terminal T. The spot information further includes positional information in relation to spots to be indicated on a map displayed by the terminal T and content information that explains each spot. These pieces of information are outputted from this storage 4 to the CPU 1, as a memory signal Sm, when they are requested. The storage 4 constitutes individual information registering means of the present invention.

The CPU 1 is functionally composed of a map outputting element 1a, route processing element 1b, and retrieving element 1c. Of these constituents, the map outputting element 1a responds to the request information, that is, the processing server signal Sc that has been received. Practically, this element 1a retrieves all the pieces of map information stored in the storage 4 to search for map information corresponding to the request information, and reads out a searched result as a memory signal Sm. Then the element 1a provides a designated terminal T with the memory signal Sm incorporated into the processing server signal Sc through the interface 5 and the Internet IN.

In response to the processing server signal Sc that composes request information, the route processing element 1b uses the map information stored in the storage 4 so as to search for (compute) both of a route along which a vehicle runs and map information including the searched route. The element 1b reads out a retrieved result as the memory signal Sm, and then provides a designated terminal T with the memory signal Sm, which is incorporated in the processing server signal Sc, via the interface 5 and the Internet IN.

In parallel with this processing, the route processing element 1b creates route guide information needed to guide a vehicle with a specified terminal T along the retrieved route. The element 1b supplies the terminal T with the created information in the form of the processing server signal Sc by way of the interface 5 and the Internet IN.

Further, on the basis of the request signal that has been received as the processing server signal Sc, the retrieving element 1c searches for the information, including spot information, stored in the storage 4 so that a searched result is read out as the memory signal Sm. The retrieving element 1c incorporates this memory signal Sm into the processing server signal Sc, which is then provided to a designated terminal T through the interface 5 and the Internet IN.

On the other hand, the input device 3 is placed to allow an operator to input necessary information into the CPU 1. On responding to such input processing, the input device 3 generates an input signal Sin indicative of such information-inputting processing, and provides the signal Sin to the CPU 1. The CPU 1 receives the input signal Sin and performs predetermined processing specified by the input signal Sin.

When the CPU 1 carries out processing specified by the input signal Sin, information which should be given an operator who operates the server SV is produced in the server SV. Such information that has been produced is handed over to the display 2 in the form of a display signal Sdp. Thus, the display 2 executes information given by the display signal Sdp.

Each terminal T has, as shown in Fig. 1C, a processor 10 serving as processing means, which includes a CPU and memories, a memory 11, a sensor 12 serving as a measurement member, a display 12, an audio output member 14, a transmitter/receiver 15 composed of for example a portable phone, and an input device 16.

Of these constituents, the transmitter/receiver 15 is responsible for two kinds of processing. That is, when the terminal signal St is received through the Internet IN, the transmitter/receiver 15 performs predetermined input-interface processing with the terminal signal St so as to produce a processing terminal signal Stt sent to the processor 10. Further, the transmitter/receiver 15 carries out predetermined output-interface processing with a processing terminal signal Stt that has been received from the processor 10, so that the terminal signal St is sent to the server SV through the Internet IN.

The sensor 12 is provided with, by way of example, a GPS (Global positioning System) receiver, a speed sensor, and an acceleration sensor, though not shown in Fig. 1C. The GPS receiver receives a GPS electric wave that has been sent from GPS satellites traveling along their orbits. Because the GPS electric wave contains positional information, the sensor uses the positional information to compute information indicative of an absolute position of each vehicle on which each terminal T is mounted. The absolute positional information, which is expressed by both latitude and longitude information, is then sent from the sensor to the processor 10. The speed sensor is constructed in such a manner that it computes the mileage on each vehicle and seed thereof using a speed pulse signal coming from a not-shown pulse sensor to detect the rotation of a wheel of the vehicle, and outputs the computed mirage and speed information to the processor 10. Further, the acceleration sensor detects turn angles and slants in the up-and-down direction of each vehicle so as to output information representing the running direction of each vehicle to the processor 10. Thus, the above receiving and sensing elements allow the sensor 12 to provide the processor 10 with a sensor signal Ssc that corresponds to information in relation to a current position and an attitude of each vehicle and others.

The input device 16 of each terminal T is used by a crew to specify an desired map area to be displayed on the display 13, a desired destination, and others. This specification urges the navigation system to perform navigation processing in response to the specified information, so that the input device 16 produces an input signal Sin in which the specified information is reflected, and provides it to the processor 10.

The processor 10 operates on the received signals. That is, the processor 10 generates not only, based on the sensor signal Ssc, current positional information showing the current position of each vehicle on which each terminal T is mounted but also information about a request in which the input signal Sin is reflected. These pieces of information are transmitted, as the processing terminal information Stt, to the server SV via the transmitter/receiver 15.

The processor 10 receives the processing terminal signal Stt that has been transmitted from the server SV via the Internet IN and the transmitter/receiver 15. This processing terminal signal Stt indicates results that the server SV produces based on both the request information and the current positional information. Then the processor 10 extracts map information to be displayed from the processing terminal signal Stt and provides its extracted information to the display 13 as a display signal Sdp. The map information is displayed on the display 13. The information that will be displayed on the display 13 includes, in addition to the foregoing map information, map information along a route or route information according to route guide information, which are produced by the route processing element 1b of the server SV.

Of the route guide information, information which should be informed of a driver of each vehicle by a voice massage is outputted to the voice generator 14 as a voice signal Sad. This enables the voice generator 14 to utter a necessary voice message to guide the driver.

In addition, the map information and others which have been transmitted from the server SV, which are required to temporarily be stored, are sent from the processor 10 to the memory 11 in the form of a memory signal Sm for temporal storage therein. This memory. signal Sm is read out, if required, for display or other purposes.

Referring to Figs. 2 to 4, navigation processing carried out by the server SV of the foregoing navigation system S will now be described.

First, processing for retrieving a map (map retrieval processing) will be explained with the flowchart shown in Fig. 2. This processing is performed by the server SV in order to display a desired map on the display 13 of a designated terminal T.

When the CPU 1 starts the map retrieval processing, it is determined whether or not command information for a certain map has been received from each terminal T (step S1). If there has been no request information (No at step S1), the processing is continued with monitoring the reception of the request information. When such information has been received from a certain terminal T (Yes at step S1), the certain terminal T that has issued the request information is subjected to authentication processing which is carried out by the CPU 1 (step S2).

After the authentication processing has been completed, the CPU 1 (i.e., the retrieving element 1c) uses the received request information to retrieve the storage 4. Namely, map information required by the map outputting element 1a is searched from all the pieces of map information stored by the storage 4 (steps S3, S4). When the retrieval is completed (Yes at step S4), the searched map information is transmitted to the certain terminal T through the interface 5 and the Internet IN (step S5).

During the transmission of the searched map information, it is monitored if or not all the pieces of information have been transmitted (step S6). When the monitoring show that the transmission has not completed yet (No at step S6), the transmission is kept to continue. By contrast, while the transmission of all the pieces of necessary map information has been completed (Yes at step S6), the map retrieval processing is terminated.

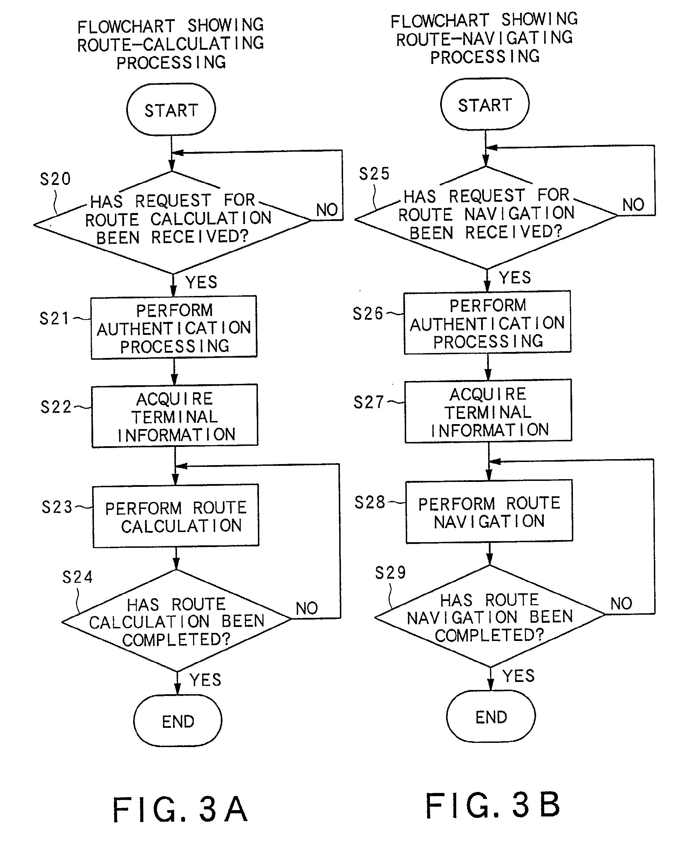

Referring to Fig. 3A, route-calculating processing will now be described. This processing is prepared for calculating a route for guiding a vehicle on which the terminal T is mounted.

When this route-calculating processing is activated, the CPU 1 first checks whether or not information indicative of a request for route calculation has been received (step S20). Such request information includes a stating place, a destination place, and route conditions (for example, a preference is given to highways or a particular road is necessarily included) which are used to calculate a desired route by the CPU 1. This determination is continued until the reception of such request (No at step S20). On the other hand, in cases where such request for route calculation has been received from a certain terminal T (Yes at step S20), the certain terminal T that has issued the request is subjected to authentication processing which is carried out by the CPU 1 (step S21).

After the authentication processing, individual information about a user who owns the certain terminal T is extracted from the storage 4 (step S22). Then, based on both of various conditions, such as a destination place, included in the request information and the individual information acquired, the CPU 1 (i.e., the route processing element 1b) carries out route calculation processing in a predetermined manner (steps S23 and S24). On completing the route calculation processing (Yes at step S24), the calculated results are temporarity stored in a not-shown memory in the server SV, then the processing is ended. Another example may be configured such that the calculated results of requested route is transmitted to the certain terminal that issued the request to present it on the display 13 of the terminal T.

Referring to Fig. 3B, route-navigating processing will now be described, which is performed to guide, along the calculated route, a vehicle on which the above certain terminal T is mounted.

When this route-navigating processing is activated, the CPU 1 first checks whether or not information indicative of a request for starting a route guide has been received from the above certain terminal T (step S25). This determination is continued until the reception of such request (No at step S25). On the other hand, in cases where such request for a route guide has been received from the certain terminal T (Yes at step S25), the certain terminal T that has issued the request is subjected to authentication processing which is carried out by the CPU 1 (step S26).

After the completion of the authentication processing, individual information about a user who owns the certain terminal T is extracted from the storage 4 for confirmation (step S27). Then, in response to the request information, the CPU 1 (i.e., the route processing element 1b) carries out route-navigating processing necessary for navigation (step S28 and S29). When the route-navigating processing is kept continuing until its completion is issued (step S29). Incidentally, the route-navigating processing carried out at step S28 includes processing for acquiring from the certain terminal T information indicative of the current position of the vehicle, processing for determining whether or not the current position is along the route calculated in advance, and processing for not only calculating geographical relationships between the vehicle's current position and well-known positional targets existing along a remaining part of the route along which the vehicle runs from now on but also transmitting the geographical relationships to the certain terminal T through the Internet IN for reference to the driver. The well-known positional targets are for example an intersection at which the vehicle should turn or a landmark toward which the vehicle should run.

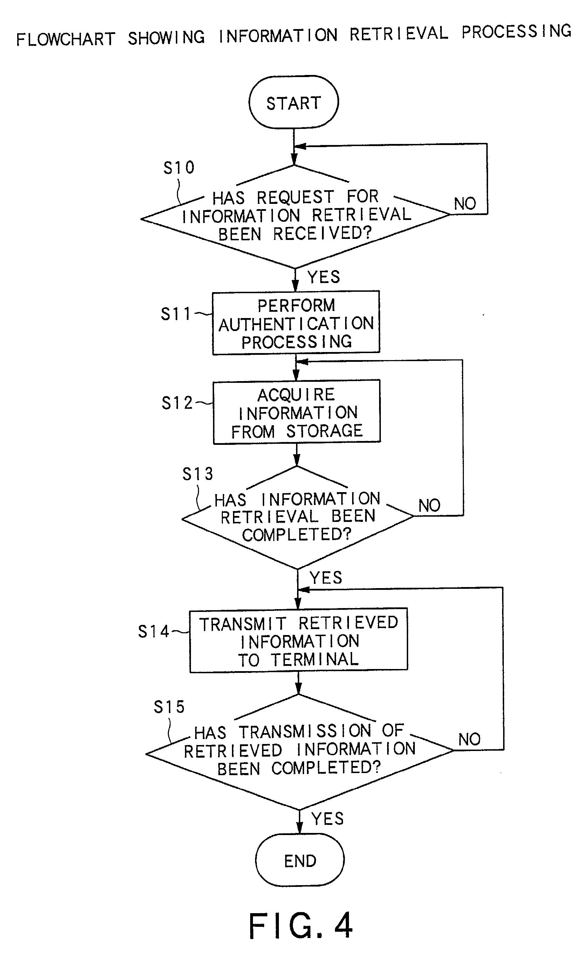

Referring to Fig. 4, information retrieval processing carried out by each terminal T will now be described. This information retrieval processing is to retrieve information which should inform a driver on each terminal T and which relates to the navigation processing.

In this information retrieval information, first, it is checked whether or not a request for information to be informed has been transmitted from a certain terminal T (step S10). When such a request has not been received (No at step S10), the above checking process will be repeated. By contrast, in cases where it is determined that such a request has been issued from a certain terminal T (Yes at step S10), the processing is moved to authentication processing for the certain terminal T (step S11).

After completing the authentication processing, the request that has been transmitted is used by the CPU 1 (i.e., the retrieving element 1c) for retrieving necessary information form all the pieces of information stored in the storage 4 (steps S12 and S13). On completion of such information retrieval (Yes at step S13), the retrieved information is sent back to the certain terminal T through the Internet IN (step S14).

During the above transmission, it is then checked if all pieces of information to be transmitted to the certain terminal T has been transmitted or not (step S15). When there are left pieces of information to be transmitted from now on (No at step S15), the transmission processing is continued until the completion of transmission of all the pieces of information (Yes at step S15).

### (II) Display of map based on user's profile

### (Configuration)

The individual information about users (hereinafter, if necessary, referred to as users' profiles), which have been registered (stored) in the storage 4 of the server SV, can be classified into users' personal information, vehicle information, point/route information, and others.

The users' personal information includes, user by user, the name, address, sex, age, date of birth, authentication ID, race, nationality, height, weight, eyesight, hearing, percent of body fat, unmarried/married, clinical history, telephone number, portable phone carrier, portable phone number, e-mail address, provider's name, postal code, type of house, type of driver's license, renewal date of driver's license, driving history, location of a garage, occupation, occupational category, annual income, managerial position/non-managerial position, hobby, taste for music, favorite leisure, favorite foods, favorite animals, favorite sports, favorite TV/radio programs, favorite seasons, and/or favorite countries.

The vehicle information includes a limit date of vehicle inspection, date for changing the oil, auto manufacturer, type of vehicle, model year, engine type, engine displacement, grade, vehicle height, vehicle width, and/or vehicle length. The point/route information includes favorite points (locations), registered points, registered routes, and/or frequently used routes. In addition, the other information includes today's mood.

The individual information about users can be sent to a company who manages the server SV by using a postal card, electronic mail, or home page when a user purchases the terminal T. The stuff of the company, who receives such individual information, is to register such information into the server SV. Even when registered once, such information can be altered or deleted any time.

Utilization of the individual information about each user is directed to reflection of the individual information into the navigation function. For instance, the individual information is utilized for extracting destinations/locations to be searched by the search function, reflected into routes to be searched, reflected into contents of data to be displayed (such as colors, display types, and font sizes), reflected into contents of data to be guided, reflected into contents to be displayed concerning retrieval of surroundings, and utilized for, according to individual information, providing information, cutting out of a display area and its data, registering data, updating data, deleting data, providing a display method (scale view), changing types of voices, controlling guidance timing, and guiding massages concerning security.

Typically, the individual information is utilized for guiding a parking lot depending on the type of a user's vehicle, a vehicle height, a vehicle width, and/or a vehicle length, changing or limiting navigation routes, changing font sizes based on a user's age, and/or guiding a route depending on the sex of a user.

The server SV has the storage 4 that serves as individual information registering means of the present invention and into which individual information about each user is registered in advance. Based on the individual information, the CPU 1 serving as control means of the present invention carries out processing to change the display screens, retrieval items, and route guidance, and transmits it processed results to a certain terminal T as the server signal Ssv via the interface 5 and the Internet IN. The storage 4 functions as a computer-readable recording medium according to the present invention.

### (Operations)

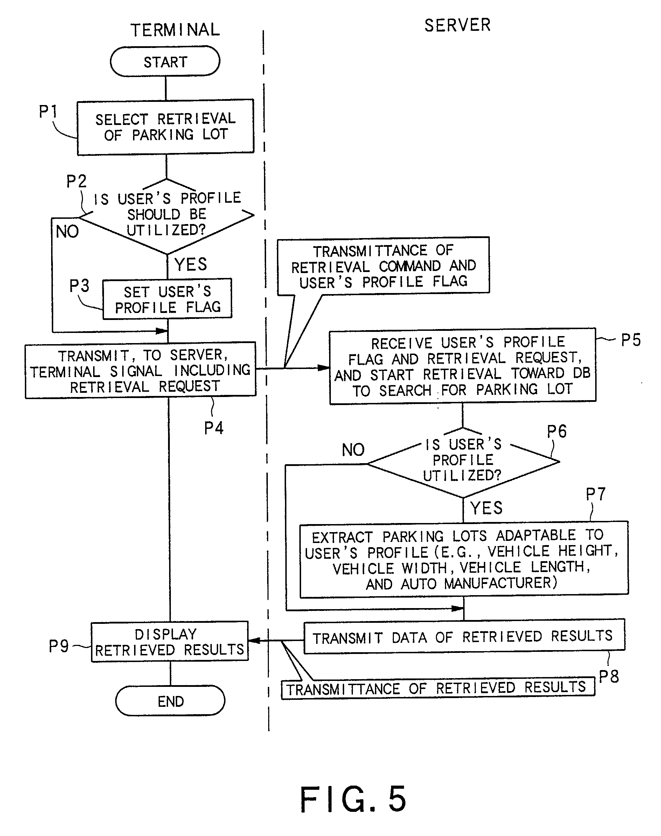

Referring to Fig. 5, one typical operation in the present embodiment will now be described, which is exemplified about processing for retrieving a parking lot using the user's individual information.

As shown in Fig. 5, a user selects the retrieval of a parking lot at a certain terminal T (step P1). In response to this command, the controller 10 of the terminal T determines, based on a user's operational command, whether or not this retrieval is conducted by utilizing the user's individual information (user's profiles) (step P2). If the determination shows the utilization of the user's individual information, the processor 10 sets a user's profile flag so as to show the utilization (step P3). In contrast, when the determination is the opposite, that is, the user's profile flag is not utilized, the processing is directly moved to step P4.

At step P4, the retrieval for one or more proper parking lots is instructed at the certain terminal T, so that both of a retrieval command and the user's profile flag are subjected to the predetermined output interface processing. As a result, the terminal signal St showing both the retrieval command and the user's profile flag is sent to the server SV from the terminal T via the Internet IN.

On the other hand, in the server SV, the CPU 1 receives the user's profile flag and the retrieval command, and starts the retrieval of the database (DB) of the storage 4 to search for one ore more parking lots (step P5). The CPU 1 then determines if or not the user's profile should be utilized on the basis of the user's profile flag (step P6). If the determination reveals that the user's profile should be utilized, one ore more parking lots according to the user's profile are extracted (step P7). The user's profile utilized for this retrieval of the parking lot includes a vehicle height, vehicle width, vehicle length, and auto manufacturer. If it is determined at step P6 that the user's profile is not utilized, the processing is directly moved to step P8.

At this step P8, the CPU 1 transmits, to the terminal T, in the form of the processing server signal Sc, the retrieved results obtained at step P7 via the interface 5 and the Internet IN. In response to this transmission, the retrieved results that have been transmitted from the server SV are displayed on the display 12 (step P9). Then the processing explained above is then terminated.

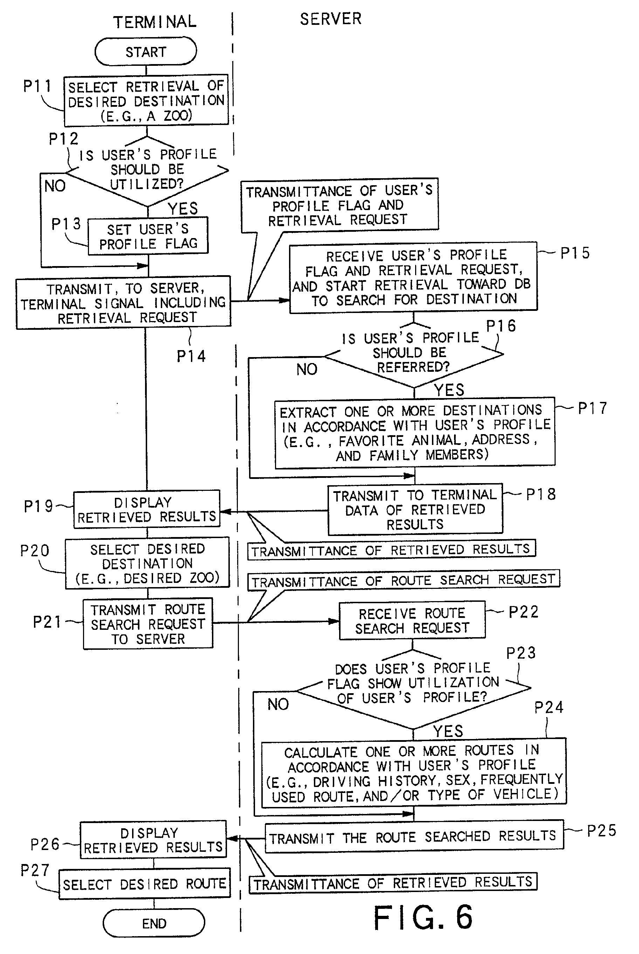

Referring to Fig. 6, the retrieval of one or more routes to a desired destination will now be described, which is also carried out by utilizing the user's individual information.

As shown in Fig. 6, a user selects the retrieval of one or more desired destinations at a certain terminal T (step P11). Such destinations are for example zoos. Then, at the terminal T, the processor 10 determines, in response to a user's request, whether a user's profile should be utilized or not (step P12). If it is determined that the user's profile should be utilized for the retrieval, a user's profile flag is set to show the utilization (step P13). On the other hand, when the user's profile is not utilized for the retrieval, the processing goes to step P14 directly.

Then, at step P14, the retrieval of one ore more desired destinations is commanded at the terminal T. Accordingly, the predetermined output interface processing is performed to transmit the terminal signal St including the user's profile flag and a retrieval request from the terminal T to the server SV via the Internet IN.

On the other hand, in the server SV, the CPU 1 receives the received user's profile flag and the retrieval request, and instructs the start of retrieval of the specified destination (for example, a zoo) toward the database (DB) of the storage 4 (step P15). The CPU 1 uses the user's profile flag to determine whether the retrieval should be made with reference to the user's profile or not (step P16). When the reference of the user's profile is required, one or more destinations in accordance with the user's file are extracted (step P17). In cases where the desired destination is a zoo, the user's profile utilized for the retrieval is composed of, for example, user's favorite animal, user's address, and user's family members. By contrast, when the reference of the user's profile is not required, the processing is made to directly proceed to step P18.

At step P18, data of the retrieved results acquired at step P17 are transmitted, as the processing server signal Sc, to the certain terminal T via the interface 5 and the Internet IN. Responsively to this transmission, the retrieved results are displayed in the list form on the display 12 of the terminal T (step P19).

Then, the user selects a desired destination (for example, a desired zoo) from a list of destinations displayed on the display 12 (step P20). In reply to this user's selection, the processor 10 of the terminal T carries out the processing such that a route search request is transmitted as the terminal signal St from the terminal T to the server SV via the Internet IN (step P21).

In response to this transmission, at the server SV, the CPU 1 receives the route search request (step P22) and uses the user's profile flag to determine whether or not the route retrieval should be conducted with reference to the user's profile (step P23). If the user's profile flag shows that the user's profile must be used, the CPU 1 calculates one or more routes that take the user's profile into consideration (step P24). The user's profile utilized for the route search is for example composed of a user's driving carrier, the sex of a user, a frequently used route, and the type of user's vehicle. In contrast, when the user's profile flag shows at step P24 that the user's profile is not utilized, the CPU 1 makes the processing goes to step P25 directly.

At step P25, the results of one or more routes calculated at step P24 are transmitted as the processing server signal Sc to the certain terminal T through the interface 5 and the Internet IN. The retrieved results thus transmitted are displayed in the list form on the display 12 of the terminal T (step P26). Then, the user finally selects a desired route from the proposed routes on the display 12 (step P27), before the termination of the processing.

### (Advantages)

As described above, the satellite navigation system according to the present invention is constructed such that the server SV has the storage 4 in which users' individual information showing user's profiles is previously recorded. And, based on such users' individual information, the navigating processing is carried out, with the result that it is not necessary for each user to register individual information (that is, a user's profile) by herself or himself. With the retrieval operations more simplified, well-personalized retrieved results, that is, more inherent retrieved results to each user's desire, can be acquired. As a result, the satellite navigation system with both easier operations and excellent usability can be provided.

Since a wide variety of kinds of users' individual information can stored in the storage 4 beforehand, most of the retrieval requests from the users can be made more personalized, thereby steadily satisfying the users' desires.

Further, the individual information about each user is stored in the storage 4 of the server SV, there is no need to increase the memory capacity of each terminal in accomplishing this satellite navigation system.

The present invention is not limited to the above embodiment, but may be modified into various other forms. For example, the Internet IN adopted as the communication means in the above embodiment can be replaced by a communication network that uses a leased line or a public line.

Moreover, the terminal can be composed of, other than the satellite navigation terminal like in the foregoing embodiment, a PDA (personal digital assistants), mobile phone, universal personal computer, various types of mobile terminals with communication interfaces, or home electronic devices with communication interfaces.

The present invention may be embodied in other specific forms without departing from the spirit or essential characteristics thereof. The above embodiments are therefore to be considered in all respects as illustrative and not restrictive, the scope of the present invention being indicated by the appended claims rather than by the foregoing description and all changes which come within the meaning and range of equivalency of the claims are therefore intended to be embraced therein.

## Claims

1. A satellite navigation system (S) comprising a server (SV) and a terminal (T) mounted on a user's vehicle and communicably connected with the server through communication means (IN), the terminal receiving map data through the communication means, detecting a current position of the user's vehicle using a satellite signal, and performing navigating processing for the user based on the map data and the current position, **characterized in that** the system comprising:
a registering unit (1 to 4) configured to be placed with the server and to store user's individual information, the user's individual information being previously registered in the registering unit; and
a processing unit (1, 5, 15, 10, 11, 13, 16) configured to perform the navigating processing by making reference to the user's individual information stored in the registering unit.

2. A server (SV) communicably connected via communication means (IN) with a terminal (T) mounted on a user's vehicle so as to constitute a navigation system (S), the terminal receiving map data through the communication means from the server, detecting a current position of the user's vehicle using a satellite signal, and performing navigating processing for the user based on the map data and the current position, **characterized in that** the server comprising:
a registering unit (1 to 4) configured to store user's individual information, the user's individual information being previously registered in the registering unit; and
a processing unit (15, 10, 11, 13, 16) configured to perform the navigating processing by making reference to the user's individual information stored in the registering unit, in response to a retrieval request transmitted from the terminal via the communication means.

3. The server according to claim 2, **characterized in that** the processing unit includes:
a retrieving unit (15, 10, 11, 13, 16) configured to receive the desired retrieval request to perform a retrieval for the retrieval request utilizing the user's individual information stored in the registering unit; and
a transmitting unit (10, 15) configured to transmit a retrieved result carried out by the retrieving unit.

4. The server according to claim 3, **characterized in that**
the retrieving unit is configured to receive, together with the retrieval request, information specifying utilization of the user's individual information, and to determine whether the retrieval with reference to the user's individual information should be carried out not, on the basis of the utilization-specifying information.

5. The server according to claim 3, **characterized in that** the retrieving unit is configured to search for a target of the retrieval by extracting the target in accordance with the user's individual information.

6. The server according to claim 2, **characterized in that** the registering unit is configured to store, as the user's individual information, at least one of user's personal information, information about a user's vehicle, and information about geographical matters in which the user is interested.

7. The server according to claim 6, **characterized in that** the information about geographical matters includes at least one of a user's favorite location and a route recently used by the user.

8. A terminal (T) mounted on a user's vehicle and communicably connected via communication means (IN) with a server (SV) so as to constitute a navigation system (S), the terminal receiving map data through the communication means from the server, detecting a current position of the user's vehicle using a satellite signal, and performing navigating processing for the user based on the map data and the current position, **characterized in that** the terminal comprising:
a transmitting unit (1, 3, 5) configured to transmit a user's desired retrieval request for the navigating processing and information specifying utilization of the user's individual information, and
a display (2) configured to display a retrieved result transmitted from server via the communication means, the retrieved result being obtained by the server on the basis of the user's individual information and the utilization-specifying information.

9. A satellite navigation method adaptable to a satellite navigation system (S) comprising a server (SV) and a terminal (T) mounted on a user's vehicle and communicably connected with the server through communication means (IN), the terminal receiving map data through the communication means, detecting a current position of the user's vehicle using a satellite signal, and performing navigating processing for the user based on the map data and the current position, **characterized in that** the method comprising the steps of:
storing user's individual information into a memory of the server previously before performing the navigating processing;
determining whether a retrieval for the navigating processing should be performed with reference to the user's individual information; and
performing the navigating processing by making reference to the user's individual information in cases where it is determined that the retrieval should be performed with reference to the user's individual information.

10. A computer program comprising computer readable code operable to cause a computer CPU 1 to perform the method of claim 9.

11. A recording medium (4) having recorded thereon a computer program as claimed in claim 10.

12. A recording medium (4) having recorded thereon at least one of user's personal information, information about a user's vehicle, and information about geographical matters in which the user is interested and accessible by the server of claim 2 and/or the terminal of claim 8.
